# EUROPÄISCHE PATENTSCHRIFT

(11) **EP 2 031 885 B1**
(45) Veröffentlichungstag und Bekanntmachung des Hinweises auf die Patenterteilung: **25.07.2012**
(21) Anmeldenummer: 08156459.3
(22) Anmeldetag: 19.05.2008
(51) Int. Cl.: H04Q 3/00, H04L 29/06, H04M 3/42

(54) **Verfahren zur Portierung und Vermittlung von Nummern in IMS-Domänen**
Method for porting and distributing numbers in IMS domains
Procédé de portage et de transmission de numéros dans des domaines IMS

(30) Priorität: 18.05.2007 EP 07108487
(43) Veröffentlichungstag der Anmeldung: 04.03.2009
(73) Patentinhaber: Vodafone Holding GmbH, 40213 Düsseldorf (DE)
(72) Erfinder: Yang, Lu, 40489 Düsseldorf (DE); Wild, Peter, 47807 Krefeld (DE)
(74) Vertreter: Weisse, Renate

(56) Entgegenhaltungen:
- EP-A- 1 761 077
- WO-A-2004/006534
- WO-A-2004/075507
- WO-A-2005/053327

## Beschreibung

### Technisches Gebiet

Die Erfindung betrifft ein Verfahren zur Portierung und Vermittlung zu einer IMS-Nummer oder IMS-Adresse eines Nutzers in einem IP Multimedia Subsystem von einer ursprünglichen IMS-Domäne eines ersten Betreibers zu einer aktuellen Domäne eines zweiten Betreibers mit folgenden Verfahrensschritten:
a) Portierung des Nutzerprofils des Nutzers mit der IMS-Nummer oder IMS-Adresse von einem Heimatserver der ursprünglichen IMS-Domäne auf einen Heimatserver der aktuellen IMS-Domäne,
b) Registrieren der Portierung der IMS-Nummer oder IMS-Adresse und der neuen IMS-Domänen-Zugehörigkeit der IMS-Nummer oder IMS-Adresse in einer Datenbank,
c) Ermitteln der neuen IMS-Domänen-Zugehörigkeit der IMS-Nummer oder IMS-Adresse durch eine Anrufsteuereinheit der ursprünglichen IMS-Domäne in der Datenbank bei einer Kommunikationsanfrage mit Nutzung der IMS-Nummer oder IMS-Adresse in der ursprünglichen IMS-Domäne durch einen weiteren Nutzer,
d) Weiterleiten der Kommunikationsanfrage durch die Anrufsteuereinheit der ursprünglichen IMS-Domäne an eine Vermittlungseinheit der aktuellen IMS-Domäne und
e) Vermitteln der Kommunikationsverbindung zwischen den Nutzern durch die Vermittlungseinheit.
Ferner betrifft die Erfindung eine Einrichtung zur Vermittlung zu einer IMS-Nummer oder IMS-Adresse eines Nutzers in einem IP Multimedia Subsystem einer IMS-Domäne, wobei die IMS-Nummer oder IMS-Adresse des Nutzers von einer ursprünglichen IMS-Domäne eines ersten Betreibers zu einer aktuellen IMS-Domäne eines zweiten Betreibers portiert ist, wobei jeder IMS-Domäne ein Heimatserver zugeordnet ist, die Einrichtung umfassend
a) einen Server mit einer Datenbank zur Registrierung der Portierung der IMS-Nummer oder IMS-Adresse und der neuen IMS-Domänen-Zugehörigkeit der IMS-Nummer oder IMS-Adresse,
b) eine Anrufsteuereinheit in der ursprünglichen IMS-Domäne zur Ermittlung der neuen IMS-Domänen-Zugehörigkeit der IMS-Nummer oder IMS-Adresse in der Datenbank bei einer Kommunikationsanfrage in der ursprünglichen Domäne durch einen weiteren Nutzer unter Nutzung der IMS-Nummer oder IMS-Adresse und zum Weiterleiten der Kommunikationsanfrage an
c) eine Vermittlungseinheit in der aktuellen IMS-Domäne zur Vermittlung der Kommunikationsverbindung zwischen den Nutzern.

### Stand der Technik

Als Rufnummernmitnahme oder Rufnummernübertragung wird im Bereich der Telekommunikation das Behalten einer bestehenden Rufnummer bei einem Wechsel zu einem anderen Telekommunikationsdienstanbieter bezeichnet. Aus technischer Sicht wird dabei die Rufnummer von einem alten Anschluss abgekoppelt und auf einen Anschluss des neuen Dienstanbieters übertragen. Dieser Vorgang wird Rufnummerportierung genannt.

Eine Möglichkeit zur Rufnummerportierung wird von vielen Telekommunikationskunden als sehr wichtig bei einem möglichen Wechsel zu einem anderen, beispielsweise günstigeren Anbieter, angesehen. Denn nur durch eine Rufnummernmitnahme lässt sich eine sehr umständliche Bekanntgabe einer neuen Rufnummer im privaten oder geschäftlichen Bereich vermeiden. Teilweise ist eine Bekanntgabe einer neuen Rufnummer bei älteren oder sehr selten genutzten Kontakten gar nicht möglich oder wird schnell übersehen. Besonders im geschäftlichen Bereich müssen kostenintensiv beispielsweise alle Kunden, Partner und möglichst auch potentielle Neukunden über eine neue Rufnummer in Kenntnis gesetzt werden, um finanzielle Schäden zu verhindern.

Eine Rufnummernübertragbarkeit ist für Anschlüsse bzw. Endgeräte in Festnetzen und Mobilfunknetzen seit längerem bekannt und wird teilweise gesetzlich geregelt. Bei diesen Rufnummerportierungen wird jeweils eine aus Ziffern bestehend Rufnummer nach der bekannten E.164-Richtlinie, beispielsweise eine aus einer Landesvorwahl, einer Ortvorwahl und einer einmaligen Anschlussnummer bestehende Telefonnummer, übertragen.

Ein Mobilfunknetz der 3. Generation, beispielsweise nach dem UMTS- (Universal Mobil Telecommunication System) Standard, enthält neben einem leitungsorientierten Subsystem (CS = Circuit Switched) für leitungs- bzw. kanalvermittelte Verbindungen und einem paketorientierten Subsystem (PS = Packet Switched) zur Vermittlung von Datenpaketen auch ein Internet Protokoll Multimedia Subsystem (IMS). Diese Subsysteme oder Bereiche werden im UMTS auch Domänen genannt und sind in dem Vermittlungsnetz bzw. Kernnetz (Core Network Domäne) eines Mobilfunknetzes vorgesehen.

Die IMS-Domäne dient dazu, IP-basierte Multimedia-Dienste anzubieten und insbesondere Internetdienste wie beispielsweise Internet-Telefonie, Internet-Radio oder Internet-Fernsehen auch für Mobilfunkteilnehmer zugänglich zu machen. Mit dem IMS wird eine gemeinsame Plattform für Echtzeit- und andere Dienste geschaffen und eine Konvergenz von CS- und PS-Netzwerkelementen eingeführt. Das IMS ist eine nach 3GPP (Third Generation Partnership Projekt) standardisierte Netzwerkarchitektur für Telekommunikationsnetzwerke und dem Fachmann bspw. aus "3GPP TS 23.228: IP multimedia subsystem; Stage 2" bekannt.

Das IMS ermöglicht einem Mobilfunkteilnehmer eine Inanspruchnahme von Multimediadiensten in so genannten Sitzungen oder engl. Sessions und steuert und kontrolliert diese Sitzungen. Dazu verwendet das IMS zur Signalisierung u. a. ein IP-basiertes Session Initial Protokoll (SIP). Zur Nutzung von Multimediadiensten registriert sich ein Mobilfunkteilnehmer bei einem Anbieter und erhält eine SIP-Nummer bzw. SIP-Adresse im URI- (Uniform Resource Identifier) Format. Diese eindeutige SIP-URI-Nummer ist im Aufbau einer E-Mail-Adresse ähnlich und kann beispielsweise "sip:12345678@anbieter.com" lauten. Bei nichtnumerischen Adressen wird oft ein numerischer Alias vergeben, sodass auch Geräte mit normaler numerischer Tastatur zum Anwählen einer SIP-Adresse verwendet werden können. Eine SIP-URI-Nummer ist nicht an einen Anschluss gebunden, sondern von überall auf der Welt mit einem IMS-fähigen Endgerät nutzbar.

Die SIP-Adresse bzw. SIP-Nummer eines Mobilfunkteilnehmers wird in einem Heimatserver (HSS = Home Subscriber Server) des Mobilfunkanbieters gespeichert. Der HSS ist in dem IMS integriert und stellt auf Anfrage nutzerspezifische Daten zur Verfügung. Als eine wesentliche Steuerungs- und Signalisierungskomponente enthält die IMS-Domäne ferner eine Serving Call Server Control Funktion (S-CSCF).

Die DE 198 43 451 A1 offenbart ein System und ein Verfahren zur Steuerung und Verwaltung der Erreichbarkeit von Endgeräten eines Mobilfunknetzes und eines Festnetzes. Dazu wird in den Vermittlungsstellen bei eingehenden Verbindungsanforderungen zwischen Mobilnetzrufnummern und Festnetzrufnummern unterschieden und von einer Datenbank die Adresse des zugehörigen Heimatregisters bereitgestellt. Damit wird u. a. eine Rufnummerportierung von einem Festnetzanschluss auf ein Mobilfunkendgerät erleichtert.

Die EP 1 761 077 A1 offenbart ein Verfahren und ein System zur Vermittlung einer Kommunikationssitzung zwischen einem Anrufer und einem Angerufenen in einer IMS-Domäne nach einer durchgeführten Nummernportierung des Angerufenen von einem ersten Netz zu einem zweiten Netz. Bei einer Rufanfrage mit einer portierten öffentlichen Identifikationsnummer wird zunächst ein Grenznetzelement, z.B. eine I-CSCF (Interrogating CSCF), des ersten Netzes erreicht, da die beibehaltene, portierte Identifikationsnummer auf dieses erste Netz verweist. Das Grenznetzelement fordert daraufhin von einer Datenbank eine weitere öffentliche Identifikationsnummer des Angerufenen für das zweite Netz an und übermittelt die Rufanfrage direkt an ein dafür zuständiges Netzknotenelement im zweiten Netz.

In der WO 2005/053327 A1 wird ein Verfahren zur Überwachung und Gebührenberechnung der Nutzung von portierten Nummern in IMS-Domänen beschrieben. Eine Rufanfrage geht zunächst bei einer S-CSCF in dem Ursprungsnetz einer portierten Nummer ein. Die S-CSCF sendet die portierte Nummer in einer Anfrage an eine Rufnummernportierungsdatenbank und erhält daraufhin eine Identität des Angerufenen in dem Zielnetz der Portierung und weitere Informationen zur Portierung. Diese Informationen werden von der S-CSCF für eine Weiterleitung der Rufanfrage zum Zielnetz verwendet. Weiterhin werden die Portierungsinformationen von der S-CSCF an ein Abrechnungssystem im Ursprungsnetz übermittelt.

Die WO 2004/006534 A1 zeigt ein Verfahren zum Weiterleiten einer Dienstanfrage in einem Telekommunikationssystem auf, bei dem sich eine empfangene Identität nicht für eine Weiterleitung eignet. Dieses tritt beispielsweise bei einer E.164-Telefonnummer als Zieladresse in einer IMS-Domäne auf. Wenn eine S-CSCF einer IMS-Domäne eine solche erste Identität eines Nutzers für eine Weiterleitung empfängt, ruft die S-CSCF eine Übersetzungsdatenbank auf, in der neben der erste weiteren Identitäten des Nutzers mit verschiedenen Formaten und für verschiedene Dienste gespeichert sind. Aus diesen Identitäten wählt die S-CSCF nach der WO 2004/006534 A1 eine geeignete für eine Weiterleitung aus und fügt darin die erste, empfangene Identität in den Teil für den Nutzernamen ein. Bei der ersten Identität kann es sich auch um eine portierte Telefonnummer handeln.

In der WO 2004/075507 A2 wird ein Verfahren zum Weiterleiten von Nachrichten über eine IMS-Domäne dargestellt. Bei einem Eingang einer an einen Server, einen Applikations-Server oder ein Gateway gerichtete Nachricht in einer I-CSCF einer IMS-Domäne erfolgt eine Anfrage an eine Datenbank nach Adressinformationen zu der Netzfunktion. Anschließend wird die Nachricht direkt von der I-CSCF an den Empfänger weitergeleitet.

### Offenbarung der Erfindung

Aufgabe der Erfindung ist es, eine Portierung einer IMS-Nummer oder IMS-Adresse und eine Vermittlung von Rufanfragen an die portierte IMS-Nummer oder IMS-Adresse benutzerfreundlicher zu ermöglichen.

Erfindungsgemäß wird die Aufgabe mit einem Verfahren der eingangs genannten Art zur Portierung und Vermittlung zu einer IMS-Nummer oder IMS-Adresse eines Nutzers in einem IP Multimedia Subsystem von einer ursprünglichen IMS-Domäne eines ersten Betreibers zu einer aktuellen Domäne eines zweiten Betreibers dadurch gelöst, dass
f) in der weitergeleiteten Kommunikationsanfrage die IMS-Nummer oder IMS-Adresse der ursprünglichen IMS-Domäne enthalten ist und ein zusätzlicher, die Portierung der IMS-Nummer anzeigender Parameter eingefügt wird.

Weiterhin wird die Aufgabe durch eine Einrichtung der eingangs genannten Art zur Vermittlung zu einer IMS-Nummer oder IMS-Adresse eines Nutzers in einem IP Multimedia Subsystem einer IMS-Domäne, wobei die IMS-Nummer oder IMS-Adresse des Nutzers von einer ursprünglichen IMS-Domäne eines ersten Betreibers zu einer aktuellen IMS-Domäne eines zweiten Betreibers portiert ist, mit folgenden Merkmalen gelöst:
d) die Anrufsteuereinheit zur Weiterleitung der Kommunikationsanfrage mit der darin enthaltenen IMS-Nummer oder IMS-Adresse der ursprünglichen IMS-Domäne und zum Einfügen eines zusätzlichen, die Portierung der IMS-Nummer anzeigenden Parameters in der weitergeleiteten Kommunikationsanfrage ausgebildet ist.

Bei einem Wechsel des Betreibers wird nach dem erfindungsgemäßen Verfahren zur IMS-Nummern- bzw. IMS-Adressenmitnahme zunächst das Nutzerprofil des Nutzers von dem Heimatserver des ursprünglichen zum Heimatserver des aktuellen Betreibers portiert, d. h. es wird zumindest die ursprüngliche IMS-Nummer unter dem Nutzerprofil in dem Heimatserver des neuen Betreibers gespeichert. Vorzugsweise werden neben der IMS-Nummer auch weitere Daten oder das komplette Nutzerprofil zum Heimatserver des neuen Betreibers portiert und dabei gegebenenfalls angepasst. Dadurch wird erreicht, dass ein Nutzer beispielsweise persönliche Voreinstellungen bei dem neuen Betreiber nicht mühsam erneut einstellen muss. Ein Wechsel des Betreibers erfolgt somit für einen Nutzer unkompliziert und schnell. Die Portierung der IMS-Nummer bzw. IMS-Adresse und/oder die IMS-Domänen-Zugehörigkeit wird zusätzlich in einer Datenbank gespeichert, um beim ursprünglichen Betreiber eingehende Kommunikationsanfragen an den neuen Betreiber weiterleiten zu können.

Bei einer Kommunikationsanfrage an den Nutzer mit einer portierten SIP-Nummer wird die Anfrage zunächst von der Anrufsteuereinheit, beispielsweise der S-CSCF der IMS-Domäne des ursprünglichen Betreibers empfangen, da die IMS-Nummer die Adresse der IMS-Domäne des ursprünglichen Betreibers enthält. Da der Nutzer nicht mehr bei der IMS-Domäne angemeldet ist, befragt die Anrufsteuereinheit die Datenbank und ermittelt so die Adresse des aktuellen Betreibers. Anschließend wird die Anfrage an die IMS-Domäne des aktuellen Betreibers weitergeleitet. Dabei kann beispielsweise innerhalb der Anfrage, wie z.B. eine SIP-INVITE-Anfrage, ein zusätzlicher Parameter eingefügt werden, um der Anrufsteuereinheit der IMS des aktuellen Betreibers eine zuvor durchgeführte IMS-Nummernportierung mitzuteilen. Dadurch wird der Anrufsteuereinheit des aktuellen Betreibers eine Zuordnung der IMS-Nummer bzw. IMS-Adresse, welche noch immer die Adresse der ursprünglichen IMS-Domäne enthält, erleichtert.

Schließlich wird mit Hilfe der Anrufsteuereinheit der IMS-Domäne des aktuellen Betreibers eine Kommunikation zwischen einem Anrufer und dem Nutzer mit der portierten IMS-Nummer über paket- oder leitungsorientierte Domänen aller beteiligten Mobilfunknetze ermöglicht. Das erfindungsgemäße Verfahren erlaubt somit eine IMS-Nummernportierung bei einem Betreiberwechsel des Nutzers.

Entsprechend werden bei der erfindungsgemäßen Einrichtung eine portierte IMS-Nummer und/oder eine IMS-Domänen-Zugehörigkeit eines Nutzers in einer Datenbank eines Servers gespeichert. Bei einer Kommunikationsanfrage durch einen weiteren Nutzer erreicht die Anfrage zunächst eine Anrufsteuereinheit des ursprünglichen Betreibers, da dessen Adresse in der IMS-Nummer enthalten ist. Die Anrufsteuereinheit stellt zunächst fest, dass der Nutzer nicht mehr in der IMS-Domäne des ursprünglichen Betreibers angemeldet ist und befragt daraufhin die Datenbank in dem Server. Als Antwort erhält die Anrufsteuereinheit die Adresse der aktuellen IMS-Domäne des Nutzers und leitet die Kommunikationsanfrage an diese weiter. Dabei kann wiederum beispielsweise ein zusätzlicher Parameter in die Anfrage eingefügt werden, um einer Anrufsteuereinheit des aktuellen Betreibers die Portierung der IMS-Nummer mitzuteilen und so eine Zuordnung der Kommunikationsanfrage zu dem Nutzer zu erleichtern. Schließlich wird wiederum ein Kommunikationsweg mit Hilfe einer oder mehrerer Vermittlungseinheiten und über eine oder mehrere paket- oder leitungsorientierte Domänen der beteiligten Mobilfunknetze aufgebaut. Auch die erfindungsgemäße Einrichtung ermöglicht somit eine IMS-Nummernportierung bei einem Betreiberwechsel des Nutzers.

Eine IMS-Nummern- oder IMS-Adressenportierung erleichtert einem Nutzer den Wechsel von einem IMS eines Betreibers zu einer IMS eines anderen Betreibers wesentlich, da die Portierung nach dem Wechsel eine Erreichbarkeit des Nutzers durch Kommunikationspartner oder Dienste gewährleistet. Ein sehr arbeitsaufwendiges und kostspieliges Mitteilen einer neuen IMS-Nummer oder IMS-Adresse an alle möglichen Kommunikationspartner oder Dienste wird durch die Portierung vermieden. Da zudem eine Information aller möglichen potentiellen Anrufer im Allgemeinen unmöglich ist, verhindert eine Portierung der IMS-Nummer bzw. IMS-Adresse finanzielle Einbussen und einen Abbruch von sozialen Kontakten bei einem Betreiberwechsel.

Eine vorteilhafte Ausgestaltung des erfindungsgemäßen Verfahrens zur Portierung und Vermittlung zu einer Nummer eines Nutzers in einem IP Multimedia Subsystem besteht darin, dass die Datenbank zur Registrierung der Portierung der Nummer und/oder der IMS-Domänen-Zugehörigkeit ganz oder teilweise in einem separaten Datenbankserver vorgesehen ist, welcher mit den IMS-Domänen vernetzt ist. Der separaten Datenbankserver ist vorzugsweise verschiedenen Betreibern von IMS-Domänen zugänglich. Auch eine Erweiterung und Nutzung vorhandener NummernportierungsDatenbanken für herkömmliche Mobilfunk- oder Festnetznummern zur Speicherung von portierten IMS-Nummern oder IMS-Adressen ist möglich. Durch den separaten Datenbankserver wird eine einfache Pflege, Aktualisierung und Nutzung von Einträgen in der Datenbank durch verschiedene Betreiber ermöglicht.

In einer weiteren bevorzugten Variante des erfindungsgemäßen Verfahrens zur Portierung und Vermittlung zu einer Nummer eines Nutzers in einem IP Multimedia Subsystem ist die Datenbank zur Registrierung der Portierung der Nummer und/oder der IMS-Domänen-Zugehörigkeit ganz oder teilweise in einem Heimatserver vorgesehen. Da bei einer Kommunikationsanforderung zu einem Nutzer über eine IMS-Domäne üblicherweise zunächst Nutzerdaten von dem Heimatserver angefordert werden, wird bei einer in dem Heimatserver vorgesehen Datenbank eine eventuell durchgeführte Portierung einer Nummer zu einem anderen Anbieter direkt ermittelt. Eine zeitaufwendige und Ressourcen beanspruchende Anfrage an eine separate Datenbank wird dadurch vermieden. Daher wird mit einer in dem Heimatserver enthaltenen Datenbank eine eventuell stattgefundene IMS-Nummernportierung schell und Ressourcen schonend festgestellt. Weiterhin ermöglicht eine in einem Heimatserver vorgesehene Datenbank auch reinen IMS-Anbietern eine IMS-Nummernportierung, da diese Anbieter im Allgemeinen keinen Zugriff auf bereits existierende, separate Nummernportierungsdatenbanken haben.

Entsprechend ist bei einer vorteilhaften Ausbildung der erfindungsgemäßen Einrichtung zur Vermittlung zu einer Nummer eines Nutzers in einer IP Multimedia Subsystem Domäne, wobei die Nummer des Nutzers von der Domäne eines ersten Betreibers zu einer Domäne eines zweiten Betreibers portiert ist, die Datenbank ganz oder teilweise in wenigstens einem Heimatserver der IMS-Domänen vorgesehen. Dadurch wird bei einer üblichen Anforderung von Nutzerdaten von dem Heimatserver bei einem Verbindungsaufbau zu einem Nutzer in einer IMS-Domäne wiederum direkt, schnell und Ressourcen schonend eine eventuelle Rufnummerportierung zu einem anderen Anbieter festgestellt.

Weitere Ausgestaltungen und Vorteile ergeben sich aus dem Gegenstand der Unteransprüche, sowie der Zeichnung mit der dazugehörigen Beschreibung.

Ein Ausführungsbeispiel der Erfindung ist nachstehend unter Bezugnahme auf die zugehörige Zeichnung näher erläutert.

### Kurze Beschreibung der Zeichnung

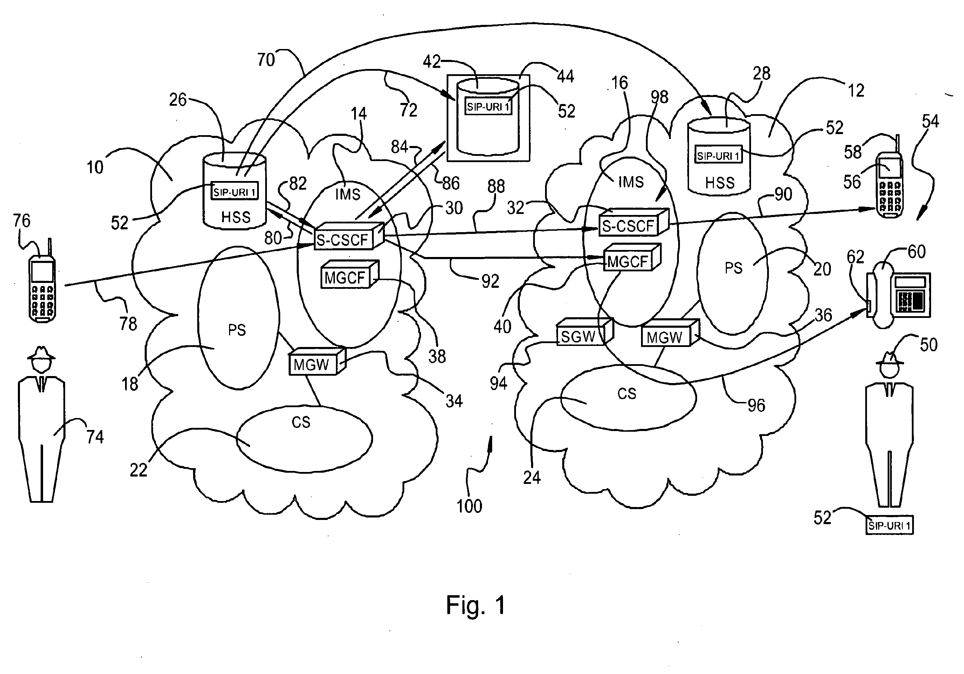

- Fig. 1: zeigt in einer schematischen Prinzipskizze ein Ausführungsbeispiel eines Verfahrens und einer Einrichtung zur Portierung und zur Vermittlung zu einer Nummer eines Nutzers in einem IP Multimedia Subsystem.

### Bevorzugtes Ausführungsbeispiel

In Fig. 1 wird mit 10 ein erstes Mobilfunknetz eines ersten Betreibers und mit 12 ein zweites Mobilfunknetz eines zweiten Betreibers bezeichnet. Beide Mobilfunknetze beinhalten ein Internet Protokoll Multimedia Subsystem (IMS) 14, 16, um IP-basierte Multimediadienste, wie beispielsweise Internet-Telefonie, Internet-Radio oder Internet-Fernsehen einem Nutzer zur Verfügung zu stellen. Im Folgenden werden die IMS 14 und 16 auch als IMS-Domänen bezeichnet. Die Mobilfunknetze 10 und 12 entsprechen einem Standard der 3. (z.B. UMTS) oder 4. Generation. Dem Fachmann sind solche Mobilfunknetze mit den entsprechenden Bestandteilen und Funktionsweisen geläufig. Der Einfachheit halber werden die Mobilfunknetze 10 und 12 deshalb nur durch eine Wolke stilisiert dargestellt und nur die zur Beschreibung des Ausführungsbeispiels relevanten Bestandteile aufgezeigt.

Die Mobilfunknetze 10 und 12 können sich geografisch überlagern. Sie enthalten neben den IMS-Domänen 14, 16 jeweils eine IP-basierte PS-Domäne (Packet Switched Domäne) 18, 20 zur Vermittlung von Datenpaketen und eine CS-Domäne (Circuit Switched Domäne) zum Aufbau von leitungs- bzw. kanalorientierten Verbindungen. Weiterhin verfügen die Mobilfunknetze 10, 12 jeweils über einen Heimatserver (engl. HSS = Home Subscriber Server) 26, 28 zum Speichern, Verwalten und Bereitstellen von nutzerspezifischen Daten (z.B. Nutzerprofile).

Die IMS-Domänen 14, 16 beider Mobilfunknetze 10, 12 nutzen zur Signalisierung u. a. ein IP-basiertes Session Initial Protokoll (SIP). Bei einer Anmeldung zur Nutzung von Diensten über eine IMS-Domäne 14 oder 16 erhält ein Nutzer eine weltweit eindeutige Nummer und/oder eine Adresse im SIP-URI-Format (SIP - Uniform Resource Identifier - Format), z.B. "sip:12345678@betreiber1.com" oder "sip:nutzer1@betreiber1.com", von dem Betreiber der IMS-Domäne 14 oder 16. Diese IMS-Nummer bzw. IMS-Adresse wird in dem entsprechenden HSS 26, 28 gespeichert.

Ferner enthalten die IMS-Domänen 14, 16 jeweils eine Anrufsteuereinheit 30, 32 als Steuerungs- und Signalisierungskomponente. Als Anrufsteuereinheit 30, 32 wird üblicherweise in einer IMS-Domäne 14, 16 eine Serving Call Server Control Funktion (S-CSCF) eingesetzt. Die Anrufsteuereinheiten 30, 32 erfüllen Aufgaben im Ruf- und Sitzungsmanagement, einschließlich Authentifizierung, Autorisierung und Erzeugen von Verrechnungsinformationen und verwalten u. a. Sitzungszustände und eine Interaktion mit Dienstplattformen.

Zum Vermitteln von Sprachdaten oder anderen Daten zwischen einer CS-Domäne 22, 24 eines Mobilfunknetzes 10, 12 und der entsprechenden PS-Domäne 18, 20 ist jeweils ein Medien-Gateway (MGW) 34, 36 vorgesehen, welches von einer Medien-Gateway-Kontrollfunktion (MGCF= Media Gateway Control Function) 38, 40 in der jeweiligen IMS-Domäne 14, 16 des Mobilfunknetzes 10, 12 gesteuert und verwaltet wird.

Portierte IMS-Nummern bzw. IMS-Adressen und eine IMS-Zugehörigkeit eines Nutzers werden in einer Datenbank 42 gespeichert, verwaltet und bereitgestellt. Die Datenbank 42 ist in einem separaten Server 44 vorgesehen, welcher mit den IMS-Domänen 14, 16 verbunden ist. Es ist auch eine Erweiterung einer bereits für Telefonnummern bestehende Nummernportierungsdatenbank denkbar. In einer alternativen Ausführung ist die Datenbank 42 ganz oder teilweise in dem HSS 26 enthalten.

Ein Nutzer 50 lässt sich zunächst in dem Mobilfunknetz 10 zur Nutzung von Multimedia-Diensten über die IMS-Domäne 14 registrieren und erhält von dem Betreiber des Mobilfunknetzes 10 eine weltweit eindeutige IMS-Nummer 52 bzw. IMS-Adresse im SIP-URI-Format. Diese können beispielsweise "sip:01234567@ betreiber1.com" und "sip:nutzer1@ betreiber1.com" lauten und werden im HSS 26 gespeichert. Die IMS-Nummer 52 ist üblicherweise als Alias der IMS-Adresse ausgebildet. Im Folgenden wird daher mit IMS-Nummer 52 sowohl die IMS-Nummer 52 als auch die IMS-Adresse bezeichnet. Unter der IMS-Nummer 52 ist der Nutzer 50 über die IMS-Domäne 14 erreichbar und kann mit Hilfe von Endgeräten 54 mit anderen Nutzern kommunizieren oder Dienste in Anspruch nehmen.

Als Endgeräte 54 können beispielsweise ein Mobilfunkendgerät 56 mit einer Mobilfunkschnittstelle 58, ein Festnetzendgerät 60 mit einer Festnetzschnittstelle 62 oder ein in Fig. 1 nicht dargestellter Rechner mit Internetanschluss verwendet werden. Das Mobilfunkendgerät 56 kann z.B. ein Mobiltelefon, Handy, Autotelefon, Smartphone, ein stationärer Rechner (z.B. PC) oder mobiler Rechner (z.B. Notebook, PDA) oder ein anderes Gerät mit einer eingebauten oder über eine Schnittstelle angeschlossenen Mobilfunkschnittstelle 58 (z.B. eine PMCCIA-Karte) sein. Das Festnetzendgerät 60 ist beispielsweise ein Telefon, eine Telefonanlage, ein Faxgerät, ein stationärer Rechner (z.B. PC) oder mobiler Rechner (z.B. Notebook, PDA) oder ein anderes Gerät mit einer eingebauten oder über eine Schnittstelle angeschlossenen Festnetzschnittstelle 62 (z.B. ein Modem oder ein Rooter). Die Endgeräte 54 kommunizieren unter Verwendung der IMS-Nummer 52 mit anderen Endgeräten über die CS-Domäne 22, die PS-Domäne 18 oder mit Hilfe des MGW 34 über beiden Domänen 18, 22. Dabei werden die Verbindungen von der Anrufsteuereinheit 30 und bei Nutzung des MGW 34 von dem MGCF 38 aufgebaut und verwaltet.

Wechselt der Nutzer 50 die IMS-Domäne, indem er sich bei dem Betreiber des Mobilfunknetzes 12 anmeldet und fortan die IMS-Domäne 16 benutzt, so geschieht dies unter Mitnahme bzw. Portierung der IMS-Nummer 52. Dazu wird zunächst die IMS-Nummer 52 von dem Heimatserver 26 des Mobilfunknetzes 10 zum Heimatserver 28 des Mobilfunknetzes 12 portiert und dort gespeichert (Pfeil 70). Dabei können weitere Daten des Nutzers 50 oder das komplette Nutzerprofil ebenfalls zum Heimatserver 28 portiert und gegebenenfalls an bestimmt Leistungsmerkmale des Mobilfunknetzes 12 angepasst werden. Anschließend werden die IMS-Nummer 52 und die neue IMS-Zugehörigkeit des Nutzers 50 in der Datenbank 42 des Servers 44 registriert (Pfeil 72). Der Nutzer 50 behält somit seine ursprüngliche IMS-Nummer 52, welche auf die IMS-Domäne 14 verweis, obwohl der Nutzer nun über die IMS-Domäne 16 erreichbar ist.

Bei einer Kommunikationsanfrage eines weiteren Nutzers 74 mit einem Endgerät 76 oder eines Dienstes unter Nutzung der IMS-Nummer 52 wird die Anfrage an die Anrufsteuereinheit 30 der IMS-Domäne 14 geleitet, Pfeil 78 da die IMS-Nummer 52 die IMS-Domäne 14 adressiert. Die Anfrage 78 kann beispielsweise eine SIP-INVITE-Anforderung darstellen. Die Anrufsteuereinheit 30 fordert üblicherweise zunächst Nutzerinformationen bezüglich der IMS-Nummer 52 von dem HSS 26 an, Pfeil 80. Da wegen des Wechsels des Nutzers 50 zum Mobilfunknetz 12 keine Nutzerdaten bzw. kein Nutzerprofil bezüglich des Nutzers 50 in der HSS 26 vorhanden sind, antwortet der HSS 26, dass keine Nutzerdaten vorhanden sind, Pfeil 82. Daraufhin sendet die Anrufsteuereinheit 30 eine Anfrage an den Server 44 mit der Datenbank 42, Pfeil 84. Der Server 44 ermittelt in der Datenbank 42 die Adresse der IMS-Domäne 16 als neue IMS-Domänen-Zugehörigkeit der IMS-Nummer 52 und sendet diese an die Anrufsteuereinheit 30, Pfeil 86.

Nachdem die Anrufsteuereinheit 30 auf diese Weise die zuständige IMS-Domäne 16 ermittelt hat, leitet die Anrufsteuereinheit 30 die Kommunikationsanfrage an die Anrufsteuereinheit 32 der IMS-Domäne 16 weiter, Pfeil 88. Dabei kann der Anfrage ein zusätzlicher, die Portierung der IMS-Nummer anzeigender Parameter angefügt werden. Dies erleichtert der Anrufsteuereinheit 32 das Verarbeiten der Anfrage, welche eine IMS-Nummer 52 enthält, die eigentlich auf die ursprüngliche IMS-Domäne 14 verweist. Die Anrufsteuereinheit 32 leitet die Kommunikationsanfrage an ein angemeldetes Endgerät 56 des Nutzers weiter (Pfeil 90) und verwaltet die Kommunikation zwischen dem Endgerät 56 und dem Endgerät 76 über die PS-Domäne 20 und beispielsweise die PS-Domäne 18 oder die CS-Domäne 22 und das MGW 34, falls das Endgerät 76 in dem Mobilfunknetz 10 angemeldet ist.

Alternativ ist auch eine Übermittlung einer ebenfalls portierten Telefonnummer des Nutzers 50 von der Datenbank 42 an die Anrufsteuereinheit 30 bei einer Kommunikationsanfrage 78 möglich. Im diesem Fall leitet die Anrufsteuereinheit 30 die Anfrage an die MGFC 40 der IMS-Domäne 16 weiter, Pfeil 92. Dabei kann wiederum ein zusätzlicher, die Portierung anzeigender Parameter an die Kommunikationsanfrage angefügt werden. Die MGFC 40 sendet daraufhin über ein Signalisierungs-Gateway 94 und die CS-Domäne 24 eine Rufanforderung (z.B. eine Initial Address Message) an das in der CS-Domäne 24 angemeldetes Endgerät 60, Pfeil 96. Ein Verbindungsaufbau erfolgt dann über die CS-Domäne 24. Somit stellen die MGFC 40 und die Anrufsteuereinheit 30 einzeln oder in Kombination eine Vermittlungseinheit 98 zum Vermitteln der Kommunikationsverbindung zwischen Endgeräten dar.

In einer alternativen Ausführung ist die Datenbank 42 ganz oder teilweise in den HSS 26, 28 vorgesehen. Dadurch erhält die Anrufsteuereinheit 30 bereits bei der Anfrage an den HSS 26 die Adresse der IMS-Domäne 16 als für die IMS-Nummer 52 zuständige Domäne. Der separate Server 44 und die Anfrage 84 werden nicht mehr benötigt. Dadurch wird die für die IMS-Nummer 52 zuständige IMS-Domäne 16 schneller und ohne zusätzliche Komponente von der Anrufsteuereinheit 30 ermittelt.

Das Ausführungsbeispiel einer Einrichtung 100 zur Vermittlung zu einer Nummer eines Nutzers in einer IMS-Domäne enthält einen Server 44 mit einer Datenbank 42, in der die Portierung der Nummer und/oder die IMS-Domänen-Zugehörigkeit registriert wird, eine Anrufsteuereinheit 30 zum Ermitteln der Zugehörigkeit der IMS-Nummer 52 mit Hilfe der Datenbank 42 und eine Vermittlungseinheit 98 zum Vermitteln von Kommunikationswegen zwischen verschiedenen Nutzern. Diese Komponenten wurden bereits weiter oben ausführlich beschrieben. Die Funktionsweise der Einrichtung 100 entspricht der beschriebenen Funktionsweise des Ausführungsbeispiels eines Verfahrens zur Portierung und Vermittlung zu einer portierten IMS-Nummer 52. Auch bei der Einrichtung 100 wird in einer alternativen Ausführung die Datenbank 42 ganz oder teilweise in dem HSS 26 angeordnet, wodurch der Server 44 nicht mehr benötigt wird.

### Bezugszeichenliste

| | | | |
|---|---|---|---|
| 10 | erstes Mobilfunknetz | 56 | Mobilfunkendgerät |
| 12 | zweites Mobilfunknetz | 58 | Mobilfunkschnittstelle |
| 14 | IMS-Domäne 1. Mobilfunknetz | 60 | Festnetzendgerät |
| 16 | IMS-Domäne 2. Mobilfunknetz | 62 | Festnetzschnittstelle |
| 18 | PS-Domäne 1. Mobilfunknetz | 70 | Portierung IMS-Nummer |
| 20 | PS-Domäne 2. Mobilfunknetz | 72 | Registrierung in Datenbank 42 |
| 22 | CS-Domäne 1. Mobilfunknetz | 74 | weiterer Nutzer |
| 24 | CS-Domäne 2. Mobilfunknetz | 76 | Endgerät von 74 |
| 26 | Heimatserver 1. Mobilfunknetz | 78 | Kommunikationsanfrage |
| 28 | Heimatserver 2. Mobilfunknetz | 80 | Anfrage an Heimatserver 26 |
| 30 | Anrufsteuereinheit in IMS 14 | 82 | Antwort von Heimatserver 26 |
| 32 | Anrufsteuereinheit in IMS 16 | 84 | Anfrage an Datenbank 42 |
| 34 | Medien-Gateway 1. Mobilfunknetz | 86 | Antwort von Datenbank 42 |
| 36 | Medien-Gateway 2. Mobilfunknetz | 88 | Weiterleiten an IMS 16 |
| 38 | MGFC in IMS 14 | 90 | Weiterleiten an Endgerät 56 |
| 40 | MGFC in IMS 16 | 92 | Weiterleiten an MGFC 40 |
| 42 | Datenbank | 94 | Signalisierungs-Gateway |
| 44 | Server | 96 | Weiterleiten an Endgerät 60 |
| 50 | Nutzer mit portierter Nummer | 98 | Vermittlungseinheit |
| 52 | IMS-Nummer (Nutzerprofil) | 100 | Einrichtung zur Vermittlung |
| 54 | Endgeräte des Nutzers | | (von portierten IMS-Nummern) |

## Patentansprüche

1. Verfahren zur Portierung und Vermittlung zu einer IMS-Nummer oder IMS-Adresse (52) eines Nutzers (50) in einem IP Multimedia Subsystem von einer ursprünglichen IMS-Domäne (14) eines ersten Betreibers zu einer aktuellen IMS-Domäne (16) eines zweiten Betreibers mit folgenden Verfahrensschritten:
a) Portierung (70) des Nutzerprofils (52) des Nutzers (50) mit der IMS-Nummer oder IMS-Adresse (52) von einem Heimatserver (26) der ursprünglichen IMS-Domäne (14) auf einen Heimatserver (28) der aktuellen IMS-Domäne (16),
b) Registrieren (72) der Portierung (70) der IMS-Nummer oder IMS-Adresse (52) und der neuen IMS-Domänen-Zugehörigkeit der IMS-Nummer oder IMS-Adresse (52) in einer Datenbank (42),
c) Ermitteln (84, 86) der neuen IMS-Domänen-Zugehörigkeit der IMS-Nummer oder IMS-Adresse (52) durch eine Anrufsteuereinheit (30) der ursprünglichen IMS-Domäne (14) in der Datenbank (42) bei einer Kommunikationsanfrage (78) mit Nutzung der IMS-Nummer oder IMS-Adresse (52) in der ursprünglichen IMS-Domäne (14) durch einen weiteren Nutzer (74),
d) Weiterleiten der Kommunikationsanfrage durch die Anrufsteuereinheit (30) der ursprünglichen IMS-Domäne (14) an eine Vermittlungseinheit (98) der aktuellen IMS-Domäne (16) und
e) Vermitteln der Kommunikationsverbindung zwischen den Nutzern (50, 74) durch die Vermittlungseinheit (98),
**dadurch gekennzeichnet, dass**
f) in der weitergeleiteten Kommunikationsanfrage die IMS-Nummer oder IMS-Adresse (52) der ursprünglichen IMS-Domäne (14) enthalten ist und ein zusätzlicher, die Portierung der IMS-Nummer oder IMS-Adresse (52) anzeigender Parameter eingefügt wird.

2. Verfahren zur Portierung und Vermittlung zu einer IMS-Nummer oder IMS-Adresse (52) eines Nutzers (50) in einem IP Multimedia Subsystem von einer ursprünglichen IMS-Domäne (14) eines ersten Betreibers zu einer aktuellen IMS-Domäne (16) eines zweiten Betreibers nach Anspruch 1, **dadurch gekennzeichnet, dass** die Datenbank (42) zur Registrierung (72) der Portierung (70) der IMS-Nummer oder IMS-Adresse (52) und der neuen IMS-Domänen-Zugehörigkeit ganz oder teilweise in einem separaten Datenbankserver (44) vorgesehen ist, welcher mit den IMS-Domänen (14, 16) vernetzt ist.

3. Verfahren zur Portierung und Vermittlung zu einer IMS-Nummer oder IMS-Adresse (52) eines Nutzers (50) in einem IP Multimedia Subsystem von einer ursprünglichen IMS-Domäne (14) eines ersten Betreibers zu einer aktuellen Domäne (16) eines zweiten Betreibers nach einem der Ansprüche 1 oder 2, **dadurch gekennzeichnet, dass** die Datenbank (42) zur Registrierung (72) der Portierung (70) der IMS-Nummer oder IMS-Adresse (52) und der neuen IMS-Domänen-Zugehörigkeit ganz oder teilweise in einem Heimatserver (26) vorgesehen ist.

4. Einrichtung (100) zur Vermittlung zu einer IMS-Nummer oder IMS-Adresse (52) eines Nutzers (50) in einem IP Multimedia Subsystem einer IMS-Domäne (16), wobei die IMS-Nummer oder IMS-Adresse (52) des Nutzers (50) von einer ursprünglichen IMS-Domäne (14) eines ersten Betreibers zu einer aktuellen IMS-Domäne (16) eines zweiten Betreibers portiert ist, wobei jeder IMS-Domäne (14, 16) ein Heimatserver (26, 28) zugeordnet ist, und Einrichtung (100) umfasst:
a) einen Server (44) mit einer Datenbank (42) zur Registrierung der Portierung der IMS-Nummer oder IMS-Adresse (52) und der neuen IMS-Domänen-Zugehörigkeit der IMS-Nummer oder IMS-Adresse (52),
b) eine Anrufsteuereinheit (30) in der ursprünglichen IMS-Domäne (14) zur Ermittlung der neuen IMS-Domänen-Zugehörigkeit der IMS-Nummer oder IMS-Adresse (52) in der Datenbank (42) bei einer Kommunikationsanfrage in der ursprünglichen Domäne (14) durch einen weiteren Nutzer (74) unter Nutzung der IMS-Nummer oder IMS-Adresse (52) und zum Weiterleiten der Kommunikationsanfrage an
c) eine Vermittlungseinheit (98) in der aktuellen IMS-Domäne (16) zur Vermittlung der Kommunikationsverbindung zwischen den Nutzern (50, 74),
**dadurch gekennzeichnet, dass**
d) die Anrufsteuereinheit (30) zur Weiterleitung der Kommunikationsanfrage mit der darin enthaltenen IMS-Nummer oder IMS-Adresse (52) der ursprünglichen IMS-Domäne (14) und zum Einfügen eines zusätzlichen, die Portierung der IMS-Nummer oder IMS-Adresse (52) anzeigenden Parameters in der weitergeleiteten Kommunikationsanfrage ausgebildet ist.

5. Einrichtung (100) zur Vermittlung zu einer IMS-Nummer oder IMS-Adresse (52) eines Nutzers (50) in einem IP Multimedia Subsystem einer IMS-Domäne (14), wobei die IMS-Nummer oder IMS-Adresse (52) des Nutzers (50) von einer ursprünglichen IMS-Domäne (14) eines ersten Betreibers zu einer aktuellen IMS-Domäne (16) eines zweiten Betreibers portiert ist, nach Anspruch 4, **dadurch gekennzeichnet, dass** die Datenbank (42) ganz oder teilweise in wenigstens einem Heimatserver (26, 28) der IMS-Domänen (14, 16) vorgesehen ist.

## Claims

1. A method for porting and switching to an IMS number or IMS address (52) of a user (50) in an IP Multimedia Subsystem from an original IMS domain (14) of a first operator to a current IMS domain (16) of a second operator comprising the following steps:
a) porting (70) the user profile (52) of the user (50) with the IMS number or IMS address (52) from a home server (26) of the original IMS domain (14) to a home server (28) of the current IMS domain (16),
b) registering (72) the porting (70) of the IMS number or IMS address (52) and the new IMS domain membership of the IMS number or IMS address (52) in a database (42),
c) determining (84, 86) the new IMS domain membership of the IMS number or IMS address (52) by a call control unit (30) of the original IMS domain (14) in the database (42) on a communication request (78) with use of the IMS number or IMS address (52) in the original IMS domain (14) by another user (74),
d) forwarding the communication request by the call control unit (30) of the original IMS domain (14) to a switching unit (98) of the current IMS domain (16) and
e) switching the communication link between the users (50, 74) by the switching unit (98),
**characterized in that**
f) the IMS number or the IMS address (52) of the original IMS domain (14) is included in the forwarded communication request, and an additional parameter is added indicating the porting of the IMS number and IMS address (52).

2. A method for porting and switching to an IMS number or IMS address (52) of a user (50) in an IP Multimedia Subsystem from an original IMS domain (14) of a first operator to a current IMS domain (16) of a second operator according to claim 1, **characterized in that** the database (42) for registration (72) of the porting (70) of the IMS number or IMS address (52) and the new IMS domain membership is provided completely or partially in a separate database server (44) which is networked with the IMS domains (14, 16).

3. A method for porting and switching to an IMS number or IMS address (52) of a user (50) in an IP Multimedia Subsystem from an original IMS domain (14) of a first operator to a current domain (16) of a second operator according to one of claims 1 or 2, **characterized in that** the database (42) for registration (72) of the porting (70) of the IMS number or IMS address (52) and the new IMS domain membership is provided completely or partially in a home server (26).

4. Device (100) for switching to an IMS number or IMS address (52) of a user (50) in an IP Multimedia Subsystem of a IMS domain (16), wherein the IMS-number or IMS address (52) of the user (50) is ported from the original IMS domain (14) of a first operator to a current IMS domain (16) of a second operator, and wherein a home server (26, 28) is allocated to each IMS domain (14, 16), and the device (100) comprising:
a) a server (44) with a database (42) for registration of the porting of the IMS number or IMS address (52) and the new IMS domain membership of the IMS number or IMS address (52),
b) a call control unit (30) in the original IMS domain (14) for determining the new IMS domain membership of the IMS number or IMS address (52) in the database (42) on a communication request in the original domain (14) by a further user (74) using the IMS number or IMS address (52) and for forwarding the communication request to
c) a switching unit (98) in the current IMS domain (16) for switching the communication link between the users (50, 74),
**characterized in that**
d) the call control unit (30) is adapted for forwarding the communication request with the therein contained IMS number or IMS address (52) of the original IMS domain (14) and for inserting an additional parameter in the forwarded communication request indicating the porting of the IMS number or IMS address (52).

5. Device (100) for switching to an IMS number or IMS address (52) of a user (50) in an IP Multimedia Subsystem of a IMS domain (14), wherein the IMS number or IMS address (52) of the user (50) is ported from the original IMS domain (14) of a first operator to a current IMS domain (16) of a second operator according to claim 4, **characterized in that** the database (42) is provided completely or partially in at least one home server (26, 28) of the IMS-domains (14, 16).

## Revendications

1. Procédé pour le portage et la commutation vers un numéro IMS ou une adresse IMS (52) d'un utilisateur (50) contenu(e) dans un sous-système IP multimédia d'un domaine IP multimédia d'origine (14) d'un premier opérateur vers un domaine IP multimédia actuel (16) d'un second opérateur, comportant les étapes de procédé suivantes :
(a) portage (70) du profil (52) de l'utilisateur (50) avec le numéro IMS ou l'adresse IMS (52) d'un serveur local (26) du domaine IP multimédia d'origine (14) sur un serveur local (28) du domaine IP multimédia actuel (16),
(b) enregistrement (72), dans une banque de données (42), du portage (70) du numéro IMS ou de l'adresse IMS (52) et de l'affiliation au nouveau domaine IP multimédia du numéro IMS ou de l'adresse IMS (52),
(c) détermination (84, 86) de l'affiliation au nouveau domaine IP multimédia du numéro IMS ou de l'adresse IMS (52) par une unité de commande d'appels (30) du domaine IP multimédia d'origine (14) dans une banque de données (42) lors d'une demande de communication (78) utilisant le numéro IMS ou l'adresse IMS (52) dans le domaine IP multimédia d'origine (14) par un autre utilisateur (74),
(d) transfert de la demande de communication par l'unité de commande d'appels (30) du domaine IP multimédia d'origine (14) à une unité de commutation (98) du domaine IP multimédia actuel (16) et,
(e) commutation de la liaison de communication entre les utilisateurs (50, 74) par l'unité de commutation (98),
**caractérisé en ce que**
(f) le numéro IMS ou l'adresse IMS (52) du domaine IP multimédia d'origine (14) est contenu(e) dans la demande de communication transférée et un paramètre supplémentaire, indiquant le portage du numéro IMS ou de l'adresse IMS (52), est ajouté.

2. Procédé pour le portage et la commutation vers un numéro IMS ou une adresse IMS (52) d'un utilisateur (50) contenu(e) dans un sous-système IP multimédia d'un domaine IP multimédia d'origine (14) d'un premier opérateur vers un domaine IP multimédia actuel (16) d'un second opérateur, selon la revendication 1, **caractérisé en ce que** la banque de données (42) pour l'enregistrement (72) du portage (70) du numéro IMS ou de l'adresse IMS (52) et de l'affiliation au nouveau domaine IP multimédia est prévue en tout ou en partie dans un serveur de banque de données (44) séparé mis en réseau avec les domaines IP multimédia (14, 16).

3. Procédé pour le portage et la commutation vers un numéro IMS ou une adresse IMS (52) d'un utilisateur (50) contenu(e) dans un sous-système IP multimédia d'un domaine IP multimédia d'origine (14) d'un premier opérateur vers un domaine IP multimédia actuel (16) d'un second opérateur, selon l'une quelconque des revendications 1 ou 2, **caractérisé en ce que** la banque de données (42) pour l'enregistrement (72) du portage (70) du numéro IMS ou de l'adresse IMS (52) et de l'affiliation au nouveau domaine IP multimédia est prévue en tout ou en partie dans un serveur local (26).

4. Installation (100) pour la commutation vers un numéro IMS ou une adresse IMS (52) d'un utilisateur (50) contenu(e) dans un sous-système IP multimédia d'un domaine IP multimédia (16), le numéro IMS ou l'adresse IMS (52) de l'utilisateur (50) étant porté d'un domaine IP multimédia d'origine (14) d'un premier opérateur vers un domaine IP multimédia actuel (16) d'un second opérateur, un serveur local (26, 28) étant associé à chaque domaine IP multimédia (14, 16), l'installation (100) comprenant :
(a) un serveur (44) muni d'une banque de données (42) pour l'enregistrement du portage du numéro IMS ou de l'adresse IMS (52) et de l'affiliation au nouveau domaine IP multimédia du numéro IMS ou de l'adresse IMS (52),
(b) une unité de commande d'appels (30) située dans le domaine IP multimédia d'origine (14) pour la détermination de l'affiliation au nouveau domaine IP multimédia du numéro IMS ou de l'adresse IMS (52) dans la banque de données (42) lors d'une demande de communication dans le domaine d'origine (14) par un autre utilisateur (74) en utilisant le numéro IMS ou l'adresse IMS (52) et pour le transfert de la demande de communication à
(c) une unité de commutation (98) située dans le domaine IP multimédia actuel (16) pour la commutation de la liaison de communication entre les utilisateurs (50, 74),
**caractérisée en ce que**
(d) l'unité de commande d'appels (30) est configurée pour le transfert de la demande de communication avec le numéro IMS ou l'adresse IMS (52), contenu(e) dedans, du domaine IP multimédia d'origine (14) et l'ajout d'un paramètre supplémentaire, indiquant le portage du numéro IMS ou de l'adresse IMS (52), dans la demande de communication transférée.

5. Installation (100) pour la commutation vers un numéro IMS ou une adresse IMS (52) d'un utilisateur (50) contenu(e) dans un sous-système IP multimédia d'un domaine IP multimédia (14), le numéro IMS ou l'adresse IMS (52) de l'utilisateur (50) étant porté d'un domaine IP multimédia d'origine (14) d'un premier opérateur vers un domaine IP multimédia actuel (16) d'un second opérateur, selon la revendication 4, **caractérisée en ce que** la banque de données (42) est prévue en tout ou en partie dans au moins un serveur local (26, 28) des domaines IP multimédia (14, 16).
